# EUROPEAN PATENT SPECIFICATION

(11) **EP 3 386 203 B1**
(45) Date of publication and mention of the grant of the patent: **17.02.2021**
(21) Application number: 18160071.9
(22) Date of filing: 06.03.2018
(51) Int. Cl.: H04N 21/41, H04N 21/45, H04N 21/858, H04H 20/93

(54) **SIGNALLING OF AUXILIARY CONTENT FOR A BROADCAST SIGNAL**
SIGNALISIERUNG VON HILFSINHALT FÜR EIN RUNDFUNKSIGNAL
SIGNALISATION DE CONTENU AUXILIAIRE POUR UN SIGNAL DE RADIODIFFUSION

(30) Priority: 03.04.2017 GB 201705324
(43) Date of publication of application: 10.10.2018
(73) Proprietor: Nokia Technologies Oy, 02610 Espoo (FI)
(72) Inventor: CURCIO, Igor Danilo Diego, 33100 Tampere (FI); MATE, Sujeet Shyamsundar, 33720 Tampere (FI)
(74) Representative: Nokia EPO representatives

(56) References cited:
- US-A1- 2008 077 965
- US-A1- 2009 295 989

## Description

### Field of the Invention

This invention relates to signalling of auxiliary content for a broadcast signal, particularly, though not exclusively, where the auxiliary content is virtual reality content associated with broadcast video content.

### Background of the Invention

It is known to provide data representing large scenes to users, only part of which can be seen at a given time. For example, in the field of virtual reality (VR), it is known to capture omnidirectional video data, representing a 360 degree view field, and to transmit the video data over a network to a user device, such as a VR headset. The user will only see a portion of the 360 degree video, typically about 100 degree field-of-view, whilst the remainder of the video is in the background. The portion of the video that is displayed to the VR headset may be referred to as the primary viewport. One of the main challenges for streaming such video is the high bandwidth requirements for acceptable subjective video quality. In the case of unlimited bandwidth, both seen and unseen portions of the video could have the same resolution. In view dependent streaming, only a portion, i.e. the primary viewport, is streamed at a high quality, whilst the remaining portion is streamed at a lower quality. Document US 2009/0295989 A1 discloses a method for acquiring additional content related to broadcast content.

One method for view-dependent delivery is to split the video images into tiles, e.g. a discrete set of viewports, so that the omnidirectional space may be imagined as a map of overlapping viewports. The primary viewport may be switched discretely as the user changes orientation whilst watching content. If the overlapping between viewports is reduced to zero, the viewports may be imagined as non-overlapping tiles.

There is a growing trend for broadcasters, e.g. television broadcasters, to transmit, in addition to their main broadcast programmes, auxiliary content such as additional media streams consumable by other devices. The other devices may be mobile telephones, smartphones, tablet computers, PCs, virtual reality headsets, augmented reality glasses etc. The content that is targeted, other than for the television screen, is sometimes referred to as 'second screen content' and the concept can be extended to other devices, i.e., as third screen content, etc.

The content created for the second screen, or other screens, may be the same as the main broadcast content, or it may be different content for complementing or enriching the main broadcast. For example, a television broadcast may include a second, parallel, broadcast targeted to a second or third screen and carrying omnidirectional VR content, e.g. for display through a VR headset or similar equipment. For example, for a main broadcast may relate to a sports or music event, and the second broadcast may be omnidirectional VR content captured backstage or behind-the-scenes.

### Summary of the Invention

The invention is a method according to claim 1 or claim 9, a computer program according to claim 12, an apparatus according to claim 13 or claim 15.

### Brief Description of the Drawings

The invention will now be described, by way of non-limiting example, with reference to the accompanying drawings, in which:
Figure 1 is a perspective view of a VR display system, useful for understanding the invention;
Figure 2 is a schematic diagram of a network comprising a broadcaster system and multiple communications devices in a home or office network, in accordance with embodiments;
Figure 3 is a block diagram indicating transmission mechanisms between Figure 2 components in one embodiment;
Figure 4 is a timing diagram indicating the relative timings of signals represented in Figure 3;
Figure 5 is a block diagram indicating transmission mechanisms between Figure 2 components in a further embodiment;
Figure 6 is a timing diagram indicating the relative timings of signals represented in Figure 5;
Figure 7 is a block diagram indicating transmission mechanisms between Figure 2 components in a further embodiment;
Figure 8 is a timing diagram indicating the relative timings of signals represented in Figure 7;
Figure 9 is a block diagram showing components of a second screen device, shown in Figure 2;
Figure 10 is a flow diagram showing steps performed by a device in transmitting an indication of auxiliary content, in accordance with embodiments; and
Figure 11 is a flow diagram showing steps performed by a device in accessing and/or retransmitting auxiliary content, in accordance with embodiments.

### Detailed Description of Preferred Embodiments

Embodiments herein relate to methods and systems for providing an indication of auxiliary content associated with broadcast content, for example television programmes or films. The methods and systems are however applicable to any form of broadcast content.

In some embodiments, the auxiliary content may be virtual reality (VR) content. For example, the auxiliary content may comprise a VR video stream provided by a content provider to one or more remote devices over a network, for example an IP network such as the internet. The VR content may be live or pre-captured omnidirectional video data, representing a 360 degree field of view. In some embodiments, the video stream may be a view-dependent video stream, i.e. one in which the video data being streamed to a user is dependent on their position and/or orientation.

The VR display system may be provided with a live or stored feed from a video content source, the feed representing a virtual reality space for immersive output through the display system. In some embodiments, audio is provided, which may be spatial audio.

Nokia's OZO (RTM) VR camera is an example of a VR capture device which comprises a camera and microphone array to provide VR video and a spatial audio signal, but it will be appreciated that the embodiments are not limited to VR applications nor the use of microphone arrays at the video capture point.

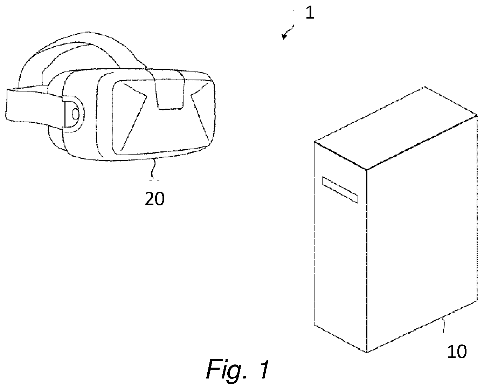

Figure 1 is a schematic illustration of a VR display system 1. The VR system 1 includes a VR headset 20, for displaying visual data in a virtual reality space, and a VR media player 10 for rendering visual data on the VR headset 20.

In the context of this specification, a virtual space is any computer-generated version of a space, for example a captured real world space, in which a user can be immersed. The VR headset 20 may be of any suitable type. The VR headset 20 may be configured to provide VR video and audio content to a user. As such, the user may be immersed in virtual space.

The VR headset 20 receives visual content from a VR media player 10. The VR media player 10 may be part of a separate device which is connected to the VR headset 20 by a wired or wireless connection. For example, the VR media player 10 may include a smart television, a games console, or a PC configured to communicate visual data to the VR headset 20.

Alternatively, the VR media player 10 may form part of the display for the VR headset 20.

Here, the media player 10 may comprise a mobile phone, smartphone or tablet computer configured to play content through its display. For example, the device may be a touchscreen device having a large display over a major surface of the device, through which video content can be displayed. The device may be inserted into a holder of a VR headset 20. With these headsets, a smart phone or tablet computer may display visual data which is provided to a user's eyes via respective lenses in the VR headset 20. The VR display system 1 may also include hardware configured to convert the device to operate as part of VR display system 1. Alternatively, VR media player 10 may be integrated into the VR display device 20. VR media player 10 may be implemented in software. In some embodiments, a device comprising VR media player software is referred to as the VR media player 10.

The VR display system 1 may include means for determining the spatial position and/or orientation of the user's head. Over successive time frames, a measure of movement may therefore be calculated and stored. Such means may comprise part of the VR media player 10. Alternatively, the means may comprise part of the VR display device 20. For example, the VR display device 20 may incorporate motion tracking sensors which may include one or more of gyroscopes, accelerometers and structured light systems. These sensors generate position data from which a current visual field-of-view (FOV) is determined and updated as the user changes position and/or orientation. The VR display device 20 will typically comprise two digital screens for displaying stereoscopic video images of the virtual world in front of respective eyes of the user, and also two speakers for delivering audio, if provided from the VR system. The embodiments herein, which primarily relate to the delivery of VR content, are not limited to a particular type of VR display device 20.

The VR display system 1 may be configured to display visual data to the user based on the spatial position of the display device 20 and/or the orientation of the user's head. A detected change in spatial position and/or orientation, i.e. a form of movement, may result in a corresponding change in the visual data to reflect a position or orientation transformation of the user with reference to the virtual space into which the visual data is projected. This allows VR content to be consumed with the user experiencing a 3D VR environment.

The VR display device 20 may display non-VR video content captured with two-dimensional video or image devices, such as a smartphone or a camcorder, for example. Such non-VR content may include a framed video or a still image. The non-VR source content may be 2D, stereoscopic or 3D. The non-VR source content includes visual source content, and may optionally include audio source content. Such audio source content may be spatial audio source content. Spatial audio may refer to directional rendering of audio in the virtual space such that a detected change in the orientation of the user's head may result in a corresponding change in the spatial audio rendering to reflect an orientation transformation of the user with reference to the virtual space in which the spatial audio data is rendered. The display of the VR display device 20 is described in more detail below.

The angular extent of the virtual environment observable through the VR display device 20 is called the visual field of view (FOV) of the display device 20. The actual FOV observed by a user depends on the inter-pupillary distance and on the distance between the lenses of the headset and the user's eyes, but the FOV can be considered to be approximately the same for all users of a given display device when the display device is being worn by the user.

The video content for the overall video scene, for example a 360 degree video scene, may be arranged as a series of two-dimensional areas or tiles, each representing a respective spatial part of the scene. Therefore, the VR media player 10 may only download from the content provider 30 those tiles which are within the current FOV, at least at a high quality.

Each tile may be represented by a video segment, which is a temporal portion of the video content, typically in the order of seconds, e.g. one second or similar. Therefore, for a given tile, multiple segments may be downloaded, buffered and then decoded and rendered in a sequential order.

Therefore, in some embodiments, there may be provided a plurality of groups of video segments, each group corresponding to a respective sub-area of the larger video content, and each segment within a group representing different temporal portions of the video content. The video content is therefore divided in both the spatial and temporal domains.

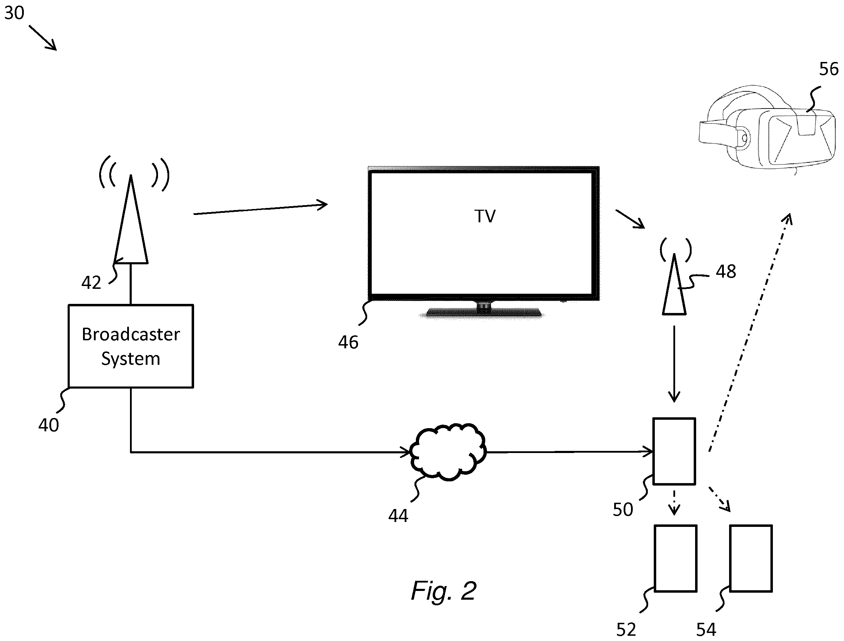

Figure 2 shows a system which is useful for understanding embodiments. A broadcaster system 40 is configured to broadcast television signals by means of an antenna system 42 and/or by means of an IPTV data stream via an IP network, e.g. the Internet 44. In the former case, the television signals may use various digital broadcasting standards, such as for example the Digital Video Broadcasting (DVB) standards for terrestrial (DVB-T, DVB-T2), satellite (DVB-S, DVB-S2), cable transmission (DVB-C, DVC-C2), or similar standards defined by other organizations, for example the 3.0 standards suite of the Advanced Television Systems Committee (ATSC 3.0). Embodiments of the invention may be implemented also in digital radio standards, for example Digital Audio Broadcasting (DAB). In general, broadcasting may refer to transmission of content simultaneously to a plurality of receivers and may take the form of broadcasting or multicasting over a television or radio broadcast network, or mobile telephone networks configured for simultaneous delivery of data to a plurality of mobile receivers, for example according to Evolved Multimedia Broadcast Multicast Service (E-MBMS).

At the user end, a typical home or office may comprise a broadcast receiver, for example a television (TV) 46, an internet access point, for example a WiFi router 48, and one or more display devices 50, 52, 54, 56. The TV 46 may be a so-called smart TV, including a network interface for data communications using WiFi and/or Bluetooth, for example. Even though the broadcast receiver has been described using the TV 46 as an example, the broadcast receiver may be any device capable of receiving a broadcast transmission, for example a set-top box, a mobile phone, a pad, a broadcast receiver embedded in a memory stick, a broadcast receiver card attached to a computing device, or alike. The display devices 50, 52, 54, 56 may comprise any combination of devices capable of receiving and displaying video data, including, but limited to, one or more of a mobile telephone, smartphone, tablet computer, virtual reality headset, augmented reality glasses or similar. One of the display devices may be configured as a so-called second screen device 50 and the other display devices as third, fourth and fifth screen devices 52, 54, 56 respectively. In the shown example, the fifth screen device 56 is illustrated as a VR headset, similar to that shown in Figure 1. However, for the avoidance of doubt, any of the other display devices 50, 52, 54 may be a VR headset. In some embodiments, all of the display devices 50, 52, 54, 56 may be VR headsets for collaborative consumption of VR content.

The broadcaster system 40 is any computer device or network of computer devices associated with a broadcasting entity, for example a television or multimedia company. In overview, the broadcasting entity may wish to provide so-called auxiliary content associated with one or more of its broadcast programmes which are transmitted to the TV 46. The auxiliary content may, for example, be VR content relevant to the broadcast programme. For example, for a main broadcast may relate to a sport or music event, and the second broadcast may be omnidirectional VR content captured backstage or behind-the-scenes. The auxiliary content may be pre-captured or delivered in real-time or near real-time.

The VR content may be streaming video content. The VR content may be transmitted by the broadcaster system 40 or an alternative provider. A challenge exists in how to inform users of the availability of the auxiliary content in order that they may interact and receive the video content.

In one embodiment, the availability of the auxiliary content is signalled to the TV 46 at the same time as, or prior to, the broadcast content with which the auxiliary content is associated.

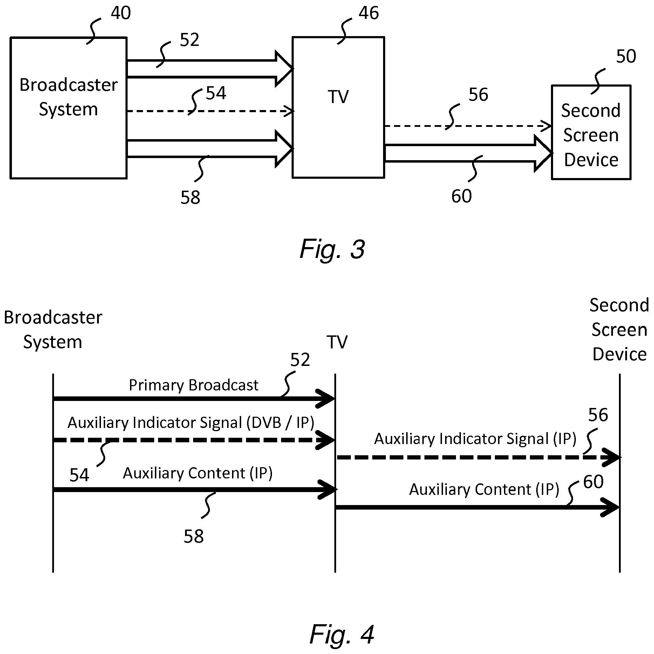

Figure 3 is a block diagram indicating the transmission mechanisms used between the broadcaster system 40, the TV 46 and the second screen device 50 referred to above, according to one embodiment. Figure 4 is a corresponding timing diagram indicating the relative timing of data signals between the broadcaster system 40, the TV 46 and the second screen device 50 referred to above.

Initially, a primary broadcast signal 52 is transmitted to a plurality of users, including the TV 46 shown herein. The primary broadcast signal 52 may use, for example, DVB or IPTV as its broadcast method. Next, an auxiliary indicator signal 54 is similarly transmitted to users, including the TV 46. Note that the auxiliary indicator signal 54 may be transmitted before the primary broadcast signal 52 in some cases, or may be offset from the start of the current broadcast programme. The auxiliary indicator signal 54 may be transmitted inband with the primary broadcast signal 52 (for example if broadcast using DVB) or may be transmitted separately as using a different physical or logical channel, for example an IP channel identified by an IP source/destination address and/or an UDP port, an MPEG

Transport Stream (TS) or Media Transport Protocol (MMPT) channel identified by a packet identifier, a Layered Coding Transport channel (LCT) identified by a transport session identifier (TSI), or a physical layer pipe (PLP) identified by a PLP identifier, or via HTTP, SIP, RTSP, RTP/RTCP protocols.

The auxiliary indicator signal 54 comprises data for indicating to devices, including for example the TV 46, that auxiliary data is available for receiving, decoding and consumption. The auxiliary indicator signal 54 further comprises an indication of one or more device types for receiving the auxiliary data. So, if the auxiliary data is VR data, then the device type indication may refer to devices capable of decoding and rendering VR content, including VR headsets, for example. Said indication may be by any practical means. For example, auxiliary indicator signal may include a signalling field comprising one or more signalling bits for indicating a device type intended for receiving the auxiliary content. Such indication may refer to a device class, for example a head-mounted display, or a sub-class, for example an augmented reality (AR) headset. Alternatively, or additionally, the auxiliary signal may indicate the format of the auxiliary content such that the type of the devices intended for receiving the content include any type of device capable of processing the auxiliary content. In one example, the device type may be indicated by referring to a video coding or video streaming standard or a file format. The auxiliary indicator signal 54 may further comprise data including, but not limited to:
- The auxiliary data availability time, e.g. using UTC;
- RTP sequence numbers;
- Number of RTP Frames
- Random access point indices, e.g. referenced to UTC;
- Auxiliary content address, e.g. IP address or channel ID (for DVB);
- Number of re-transmits/hops;
- Auxiliary content characteristics, e.g. Field-of-View, Degrees of Freedom.

At the TV 46, receipt of the auxiliary indicator signal 54 may be effective to cause a notification to be output at the TV, providing an audio and/or visual indication of the availability. For example, the TV may emit a sound and/or show text or graphical data overlaid on the current video. The text or graphical data may for example indicate the auxiliary data availability time, as an absolute time, elapsed time difference or a countdown clock. The text or graphical data may refer to a timing correspondence with other streams, for example a VR stream may become active but at a delayed time to the associated main broadcast content. Additionally, or alternatively, the text or graphical data may indicate characteristics of the auxiliary data, for example which programme it relates to and the nature of the auxiliary data, e.g. "backstage VR". In some embodiments, the audio indication of the availability may be haptic, e.g. causing vibration of the receiving device.

The number of re-transmit/hops refers to how many times the availability signal 54 and/or the auxiliary content to which it refers may be re-transmitted to other devices subsequently, as will be explained.

Still referring to Figure 3, the TV 46 may re-transmit the auxiliary indicator signal 56 to the second screen device 50. The second screen device 5 is one identified as being appropriate to the device type information previously received.

In the context of the Figure 2 system, this re-transmit may be by means of the WiFi access point 48, but it could be by other means such as by using Bluetooth or in general any short-range wireless connection, for example a radio connection. Upon receiving the retransmitted auxiliary indicator signal 56, the second screen device 50 is in receipt of the above data, and similarly may be effective to cause a notification to be output, providing an audio and/or visual indication of the availability. If the second screen device 50 is a mobile telephone or tablet computer, for example, then the notification may be a text or graphic.

The indication may also include display of a 'join' or 'access' type button, selection of which causes access to the auxiliary content by means of using the address information, e.g. the IP address or channel ID. The channel ID may comprise one or more of the following: a broadcast IP channel identified by an IP source/destination address and/or an UDP port, an MPEG Transport Stream (TS) or Media Transport Protocol (MMPT) channel identified by a packet identifier, a layered coding transport channel (LCT) identified by a transport session identifier (TSI), or a physical layer pipe (PLP) identified by a PLP identifier. A physical layer pipe may refer to one or more bursts or time slices, which may in some embodiments transmitted within a single physical layer transmission frame. Other forms of joining, or receiving the auxiliary content may be employed. In the shown example, the auxiliary content 58 is made available via a DAB channel, and hence the auxiliary content is received by the TV 46 which then sends it as a re-transmitted auxiliary content signal 60 (e.g. via the WiFi access point 48) to the second screen device 50.

In alternative embodiments, the auxiliary content may be made available via a Uniform Resource Locator (URL), a link, or an IP address, in which case the auxiliary content is downloaded directly from the source over the internet 44.

If the second screen device 50 is a VR headset, for example, then auxiliary VR content may be received, decoded and rendered to said VR headset.

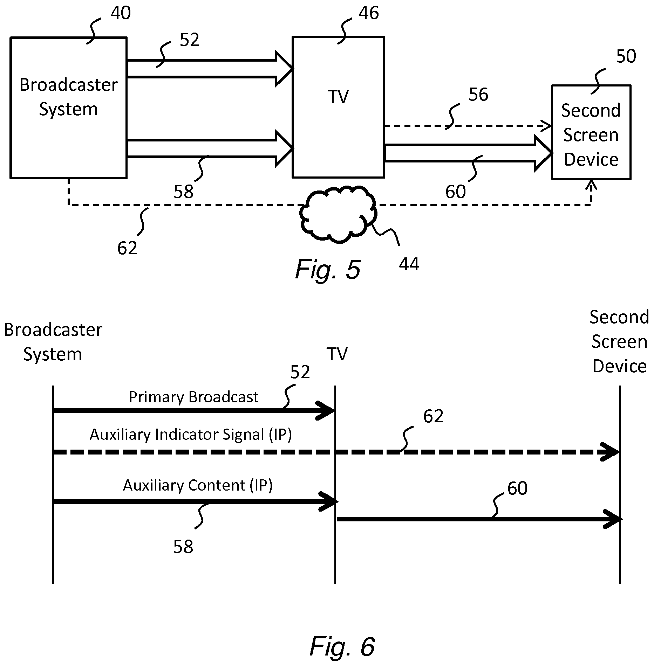

Figure 5 is a block diagram indicating the transmission mechanisms used between the broadcaster system 40, the TV 46 and the second screen device 50 referred to above, according to another embodiment. Figure 6 is a corresponding timing diagram indicating the relative timing of data signals between the broadcaster system 40, the TV 46 and the second screen device 50 referred to above.

Similar to the previous embodiment, a primary broadcast signal 52 is transmitted to a plurality of users, including the TV 46 shown herein. The primary broadcast signal 52 may use, for example, DAB or IPTV as its broadcast method. Next, rather than transmitting an auxiliary indicator signal 54 to the TV 46, an auxiliary indicator signal 62 is transmitted directly to the second screen device 50 over an IP network, such as the Internet 44. This may be by means of a wired internet access, the WiFi access point 48, or by a cellular network data protocol, e.g. using 3G or 4G.

The auxiliary indicator signal 62 may be transmitted before the primary broadcast signal 52 in some cases, or may be offset from the start of the current broadcast programme.

Similar to the previous embodiment, the auxiliary indicator signal 62 may comprise data for indicating to devices, including the second screen device 50, that auxiliary data is available for receiving, decoding and consumption. The auxiliary indicator signal 62 further comprises an indication of one or more device types for receiving the auxiliary data, as well as the further data indicated previously.

The indication may also include display of a 'join' or 'access' type button, selection of which causes access to the auxiliary content by means of using the address information, e.g. the IP address or channel ID, as described above. Other forms of joining, or receiving the auxiliary content may be employed. In the shown example, the auxiliary content is made available via a DAB channel ID, and hence the auxiliary content 58 is first received by the TV 46 which then sends it as a re-transmitted auxiliary content signal 60 (e.g. via the WiFi access point 48) to the second screen device 50. In an alternative embodiment, the auxiliary content may be made available via a URL, a link, or, an IP address, in which case the auxiliary content is downloaded directly from the source over the internet 44.

If the second screen device 50 is a VR headset, for example, then auxiliary VR content may be received, decoded and rendered to said VR headset.

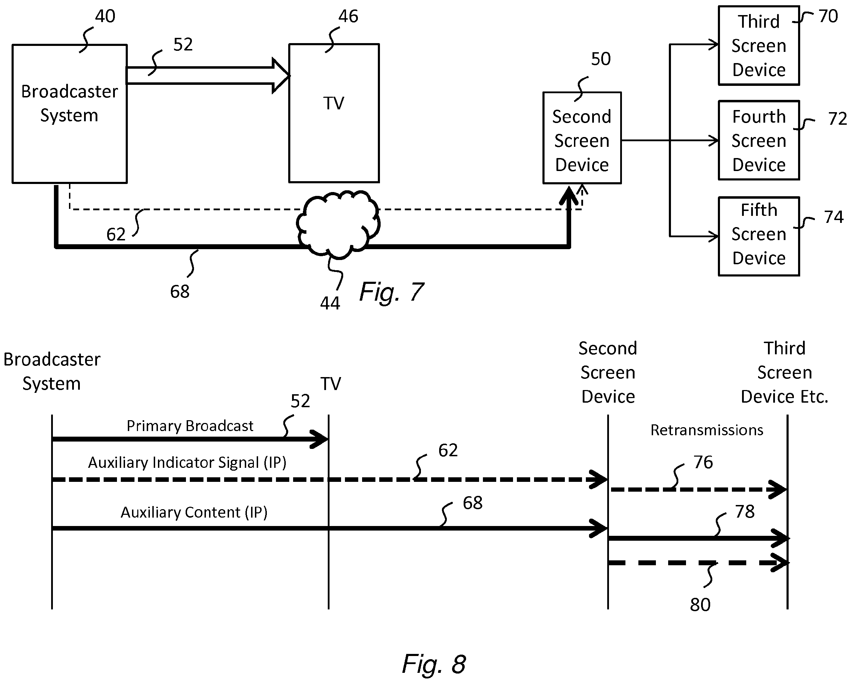

Figure 7 is a block diagram indicating the transmission mechanisms used between the broadcaster system 40, the TV 46 and the second screen device 50 referred to above, according to another embodiment. In this embodiment, the second screen device 50 may further re-transmit the auxiliary indicator signal and/or the auxiliary content to further devices, for example third, fourth and fifth screen devices 70, 72, 74. Three such devices 70, 72, 74 are shown by way of example, but a greater or lesser number of further devices may be used. Figure 8 is a corresponding timing diagram indicating the relative timing of data signals between the broadcaster system 40, the TV 46, the second screen device 50 and the third, fourth and fifth screen devices 70, 72, 74 referred to above.

A primary broadcast signal 52 is transmitted to a plurality of users, including the TV 46 shown herein. The primary broadcast signal 52 may use, for example, DAB or IPTV as its broadcast method. Next, rather than transmitting an auxiliary indicator signal 54 to the TV 46, an auxiliary indicator signal 62 is transmitted directly to the second screen device 50 over an IP network, such as the Internet 44. This may be by means of the WiFi access point 48. This is similar to the Figure 5 embodiment, but it will be appreciated that an auxiliary indicator signal 54 may be transmitted to the TV 46 for retransmission to the second screen device 50, as employed in the Figure 3 embodiment.

The auxiliary indicator signal 62 may be transmitted before the primary broadcast signal 52 in some cases, or may be offset from the start of the current broadcast programme.

Similar to the previous embodiment, the auxiliary indicator signal 62 may comprise data for indicating to devices, including the second screen device 50, that auxiliary data is available for receiving, decoding and consumption. The auxiliary indicator signal 62 further comprises an indication of one or more device types for receiving the auxiliary data, as well as the further data indicated previously.

In this embodiment, the second screen device 50 may be configured to re-transmit the auxiliary indicator signal 76 to the third, fourth and fifth screen devices 70, 72, 74. This may be dependent on the information contained in the initial auxiliary indicator signal 62, i.e. the number of permitted re-transmits/hops. The second screen device 50 is limited by this parameter, and hence may re-transmit the auxiliary indicator signal 76 a limited number of times. According to an embodiment, in addition to a maximum permitted number of hops, the auxiliary indicator signal may include the number of already effected re-transmissions or hops, which may indicate how many times the availability signal and/or the auxiliary content to which it refers has been already re-transmitted. When forwarding the availability signal and/or the auxiliary content, a device may increase the number of already effected re-transmissions or hops. A device may compare the number of re-transmissions or hops to the maximum permitted number of re-transmissions or hops. If the number of re-transmissions or hops signalled in the availability signal is less than the maximum permitted number of re-transmissions or hops, the device may re-transmit the availability signal and/or the auxiliary content to one or more other devices.

The indication provided may also include display of a 'join' or 'access' type button, selection of which causes transmission and receipt of the auxiliary content by means of using the address information, e.g. the IP address or channel ID. Other forms of joining, or receiving the auxiliary content may be employed. For example, movement of the device or pressing a hard key or button may cause joining or access. In the shown example, the auxiliary content is made available via an IP address, in which case the auxiliary content is downloaded directly from the source 40 over the internet 44, as indicated by the IP channel 68. In other embodiments, the auxiliary content may be downloaded first by the TV 46 and rebroadcast or retransmitted to the second screen device 50. Responsive to one of the second, third, fourth or fifth screen devices 50, 70, 72, 74 joining or accessing the auxiliary content, the auxiliary content is transmitted over the internet 44 to the second screen device. The second screen device 50 may then re-transmit the auxiliary content 78 to the third, fourth and/or fifth screen devices 70, 72, 74.

In this way, the auxiliary signalling and the auxiliary content is fanned-out.

In the above embodiments, one or more of the second, third, fourth and fifth screen devices 50, 70, 72, 74 may register themselves with the access point 48, if in proximity to it. For this purpose, the access point 48 may be equipped with device and capability discovery, e.g. using Universal Plug and Play (UPnP) Bonjour Service Location Protocol (SLP)v2. In this way, the second, third, fourth and fifth screen devices 50, 70, 72, 74 may inform the access point 48 of their capabilities, e.g. whether or not they are capable of decoding and/or rendering VR content. The access point 48 may therefore filter the broadcast signalling based on the device capabilities, before sending the auxiliary indicator signals.

If the access point 48 does not have a device discovery capability, one or more of the second, third, fourth and fifth screen devices 50, 70, 72, 74 may register themselves, for example using occasional notifications to the broadcaster system 40.

In some embodiments, one or more of the second, third, fourth and fifth screen devices 50, 70, 72, 74 may be outside of the range of the access point 48. In this case, the retransmission of the auxiliary signalling may fan-out using methods such as sending an SMS message or email, or via other messaging systems. Social media may be used as a mechanism to re-transmit the auxiliary indicator signals, for example. The fanning-out is similar to a conference call method.

The use of the second screen device 50, and one or more of the third, fourth and fifth screen devices 70, 72, 74 enables collaborative consumption of auxiliary content, for example VR content. In some embodiments, the root re-broadcaster, whether it be the TV 46 or the second screen device 50, may indicate to the other screen devices in the same local WiFi network a selected, or current, random access point or a similar index, for example a random access frame number, a random access time, and/or a random access byte range. This provides a common reference point for the content, i.e. so that different users in the same location can receive and consume the auxiliary content from the same point. This information may be provided in a periodic playback status update, indicated in Figure 8 by signal line 80. The information about a selected or current random access frame index for the auxiliary content may be in general referred to as playback synchronization information.

In some embodiments, the broadcaster system 40 may provide more than one auxiliary stream in association with its broadcast programmes. The auxiliary streams may be provided in sequence or in parallel, or at least partially so. The auxiliary indicator signal may indicate the individual auxiliary streams, the required device capabilities, as well as the additional information mentioned previously.

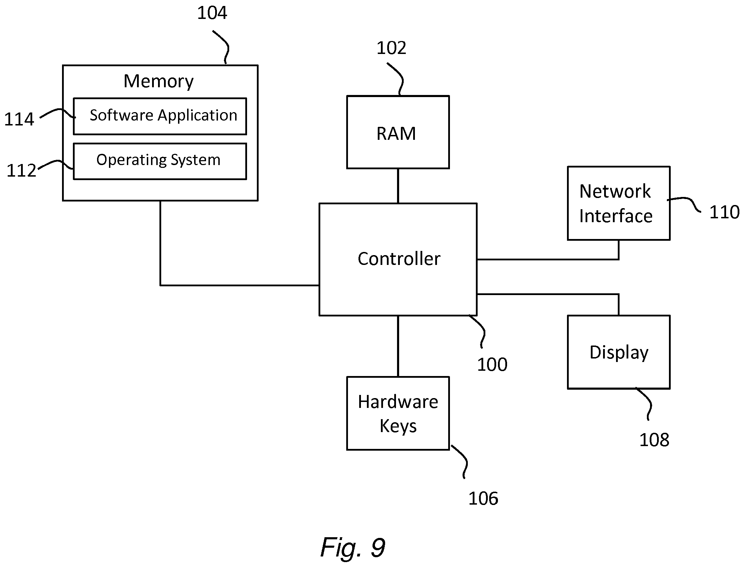

Figure 9 is a schematic diagram of components of the second screen device 50. The second screen device 50 may have a controller 100, RAM 102, a memory 104, and, optionally, hardware keys 106 and a display 108. The second screen device 50 may comprise a network interface 110 for connection to the internet 44 and/or the access point 48 and/or the third, fourth and fifth screen devices 70, 72, 74.

The controller 100 is connected to each of the other components in order to control operation thereof.

The memory 104 may be a non-volatile memory such as read only memory (ROM), a hard disk drive (HDD) or a solid state drive (SSD). The memory 104 stores, amongst other things, an operating system 112 and may store software applications 114. The RAM 102 is used by the controller 100 for the temporary storage of data. The operating system 112 may contain code which, when executed by the controller 100 in conjunction with the RAM 102, controls operation of each of the hardware components of the second screen device 50.

The controller 100 may take any suitable form. For instance, it may be a microcontroller, plural microcontrollers, a processor, plural processors, or processor circuitry.

The second screen device 50 may be a standalone computer, a server, a console, or a network thereof.

In some embodiments, the second screen device 50 may also be associated with external software applications. These may be applications stored on a remote server device and may run partly or exclusively on the remote server device. These applications may be termed cloud-hosted applications. The second screen device 50 may be in communication with the remote server device in order to utilize the software application stored there.

In some embodiments the components shown in Figure 9 may also represent those of the TV 46 and the third, fourth and fifth screen devices 70, 72, 74. The components may also represent those of the access point 48, although a display may not be required. The components described in connection to Figure 9 represent examples of means for performing corresponding functions. For example, apparatus may comprise means for performing steps of the methods as described in the claims and throughout the specification.

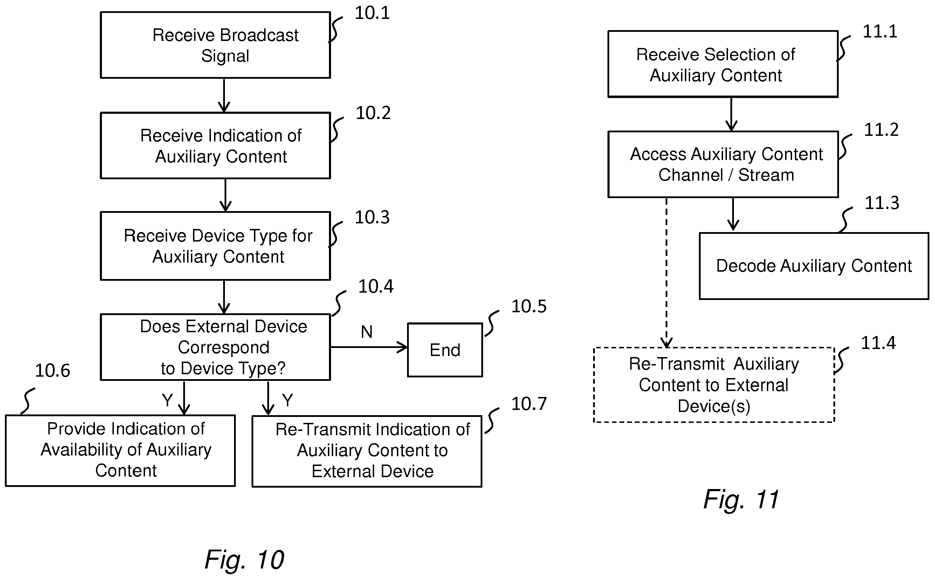

Figure 10 is a flow diagram showing processing steps performed by the TV 46, under control of a software application 114. In a first step 10.1, the broadcast signal is received. In a second step 10.2, a signal or message is received containing the indication of auxiliary content. In a third step 10.3, a signal or message (which may be the same signal or message received in step 10.2) is received indicating one or more device types for the auxiliary content. In a fourth step 10.4, it is determined if one or more external devices, e.g. the second screen device 50, corresponds to the device type. This may be performed in conjunction with the access point 48. If not, the process ends in step 10.5. If so, then in step 10.6 an indication of the availability of auxiliary content is provided, and in step 10.7 the indication of auxiliary content is re-transmitted to the external device.

The above steps may also be performed by the second screen device 50 in relation to the third, fourth and fifth screen devices 70, 72, 74.

Figure 11 is a flow diagram showing processing steps performed by the second screen device 50, subsequent to receiving an indication of auxiliary content availability. In a first step 11.1, a selection is received in relation to the auxiliary content. In a step 11.2, the auxiliary content channel or stream is accessed. In a step 11.3, the auxiliary content is decoded for output. In the event that the second screen device is configured to re-transmit the auxiliary content to one or more further devices, e.g. the third, fourth and fifth screen devices, then a further step 11.4 performs this re-transmission.

Embodiments herein provide methods and systems for convenient signaling of the availability of auxiliary content to a broadcast signal, e.g. a TV programme, and for accessing the auxiliary content thereafter. The embodiments are particularly suited to signaling and transmitting VR content, e.g. to VR headsets or augmented reality glasses.

The terms signal and message are considered synonymous throughout. The auxiliary indicator signals mentioned above can be transmitted using any protocol layer of the ISO OSI protocol stack.

## Claims

1. A method comprising:
receiving at a first device a first data message comprising an indication of availability of a plurality of auxiliary content streams associated with a broadcast signal, and an indication of one or more device types for receiving each of the plurality of auxiliary content streams; and
responsive to determining that a plurality of second devices corresponds to the one or more device types, providing an indication of said availability to the plurality of second devices, and providing playback synchronization information for the plurality of auxiliary content streams to the plurality of second devices.

2. The method of claim 1, wherein responsive to determining that the plurality of second devices corresponds to the one or more device types, transmitting a second data message to the plurality of second devices for providing said indication.

3. The method of claim 1 or claim 2, wherein the first data message comprises an indication of availability of virtual reality content associated with the broadcast signal, and the indication of one or more device types comprises capability of rendering virtual reality content.

4. The method of any preceding claim, wherein the first device is a television receiver for receiving a television broadcast signal and the first data message is received with the television broadcast signal or over a wireless channel.

5. The method of claim 2, or any claim dependent thereon, wherein the plurality of second devices are one of a mobile telephone, smartphone, tablet computer, virtual reality headset or augmented reality glasses.

6. The method of any preceding claim, wherein the first data message further comprise one or more of (i) an availability time for the plurality of auxiliary content streams (ii) an address, channel or link for accessing the plurality of auxiliary content streams (iii) a random access point and (iv) one or more characteristics of the plurality of auxiliary content streams.

7. The method of claim 2, or any claim dependent thereon, wherein the first data message comprises an indication of a number of re-transmissions to second devices, the method further comprising transmitting the second data message if said number is less than a maximum number permitted by said first device.

8. The method of claim 2, or any claim dependent thereon, further comprising receiving at the first device a request to access the auxiliary content, and responsive thereto, causing transmission of the auxiliary content, wherein the access request is received from the the plurality of second devices and the first device causes transmission of the plurality of auxiliary content streams to said second devices.

9. A method comprising:
transmitting a signal to a plurality of devices, including a first data message comprising an indication of availability of a plurality of auxiliary content streams associated with a broadcast signal, an indication of one or more device types for receiving each of the plurality of auxiliary content streams, and playback synchronization information for the plurality of auxiliary content streams.

10. The method of claim 9, wherein the first data message further comprises one or more of (i) an availability time for the plurality of auxiliary content streams (ii) an address, channel or link for accessing the plurality of auxiliary content streams, (iii) a random access point and (iv) one or more characteristics of the plurality of auxiliary content streams.

11. The method of claim 9 or 10, wherein the plurality of auxiliary content streams comprises virtual reality content and the indication of one or more device types comprises capability of rendering virtual reality content.

12. A computer program comprising instructions that when executed by a computer program control it to perform the method of any preceding claim.

13. An apparatus, the apparatus having at least one processor and at least one memory having computer-readable code stored thereon which when executed controls the at least one processor:
to receive at a first device a first data message comprising an indication of availability of a plurality of auxiliary content streams associated with a broadcast signal, and an indication of one or more device types for receiving each of the plurality of auxiliary content streams; and
responsive to determining that a plurality of second devices corresponds to the one or more device types, to provide an indication of said availability to the plurality of second devices, and to provide playback synchronization information for the plurality of auxiliary content streams to the plurality of second devices.

14. The apparatus of claim 13, further configured to perform the method of any of claims 2 to 8.

15. An apparatus, the apparatus having at least one processor and at least one memory having computer-readable code stored thereon which when executed controls the at least one processor:
to transmit a signal to a plurality of devices, including a first data message comprising an indication of availability of a plurality of auxiliary content streams associated with a broadcast signal, and an indication of one or more device types for receiving each of the plurality of auxiliary content streams, and playback synchronization information for the plurality of auxiliary content streams.

## Patentansprüche

1. Verfahren, das Folgendes umfasst:
Empfangen einer ersten Datennachricht, die eine Anzeige der Verfügbarkeit einer Vielzahl von Hilfsinhaltsströmen, die mit einem Sendesignal verknüpft sind, und eine Anzeige von einem oder mehreren Vorrichtungstypen zum Empfangen von jedem der Vielzahl von Hilfsinhaltsströmen umfasst, an einer ersten Vorrichtung und
in Reaktion auf das Bestimmen, dass eine Vielzahl von zweiten Vorrichtungen dem einen oder den mehreren Vorrichtungstypen entspricht, Bereitstellen einer Anzeige der Verfügbarkeit für die Vielzahl von zweiten Vorrichtungen und Bereitstellen von Wiedergabesynchronisationsinformationen für die Vielzahl von Hilfsinhaltsströmen für die Vielzahl von zweiten Vorrichtungen.

2. Verfahren nach Anspruch 1, wobei in Reaktion auf das Bestimmen, dass die Vielzahl von zweiten Vorrichtungen dem einen oder den mehreren Vorrichtungstypen entspricht, Übertragen einer zweiten Datennachricht zur Vielzahl von zweiten Vorrichtungen, um die Anzeige bereitzustellen.

3. Verfahren nach Anspruch 1 oder Anspruch 2, wobei die erste Datennachricht eine Anzeige der Verfügbarkeit eines virtuellen Realitätsinhalts, der mit dem Sendesignal verknüpft ist, umfasst und die Anzeige von einem oder mehreren Vorrichtungstypen eine Fähigkeit zum Rendern eines virtuellen Realitätsinhalts umfasst.

4. Verfahren nach einem der vorhergehenden Ansprüche, wobei die erste Vorrichtung ein Fernsehempfänger zum Empfangen eines Fernsehsendesignals ist und die erste Datennachricht mit dem Fernsehsendesignal oder über einen drahtlosen Kanal empfangen wird.

5. Verfahren nach Anspruch 2 oder jedem davon abhängigen Anspruch, wobei die Vielzahl von zweiten Vorrichtungen eines von einem Mobiltelefon, Smartphone, Tabletcomputer, virtuellen Realitätsheadset oder einer erweiterten Realitätsbrille sind.

6. Verfahren nach einem der vorhergehenden Ansprüche, wobei die erste Datennachricht ferner eines oder mehreres von (i) einer Verfügbarkeitszeit für die Vielzahl von Hilfsinhaltsströmen, (ii) einer Adresse, einem Kanal oder einem Link zum Zugreifen auf die Vielzahl von Hilfsinhaltsströmen, (iii) einem Direktzugriffspunkt und (iv) einer oder mehreren Eigenschaften der Vielzahl von Hilfsinhaltsströmen umfassen.

7. Verfahren nach Anspruch 2 oder jedem davon abhängigen Anspruch, wobei die erste Datennachricht eine Anzeige einer Anzahl von Neuübertragungen zu zweiten Vorrichtungen umfasst, wobei das Verfahren ferner das Übertragen der zweiten Datennachricht umfasst, wenn die Anzahl kleiner ist als eine maximale Anzahl, die von der ersten Vorrichtung zugelassen wird.

8. Verfahren nach Anspruch 2 oder jedem davon abhängigen Anspruch, das ferner das Empfangen einer Anforderung zum Zugreifen auf den Hilfsinhalt an der ersten Vorrichtung und in Reaktion darauf das Bewirken einer Übertragung des Hilfsinhalts umfasst, wobei die Zugriffsanforderung von der Vielzahl von zweiten Vorrichtungen empfangen wird und die erste Vorrichtung eine Übertragung der Vielzahl von Hilfsinhaltsströmen zu den zweiten Vorrichtungen bewirkt.

9. Verfahren, das Folgendes umfasst:
Übertragen eines Signals zu einer Vielzahl von Vorrichtungen, das eine erste Datennachricht beinhaltet, die eine Anzeige der Verfügbarkeit einer Vielzahl von Hilfsinhaltsströmen, die mit einem Sendesignal verknüpft sind, eine Anzeige von einem oder mehreren Vorrichtungstypen zum Empfangen von jedem der Vielzahl von Hilfsinhaltsströmen und Wiedergabesynchronisationsinformationen für die Vielzahl von Hilfsinhaltsströmen umfasst.

10. Verfahren nach Anspruch 9, wobei die erste Datennachricht ferner eines oder mehreres von (i) einer Verfügbarkeitszeit für die Vielzahl von Hilfsinhaltsströmen, (ii) einer Adresse, einem Kanal oder einem Link zum Zugreifen auf die Vielzahl von Hilfsinhaltsströmen, (iii) einem Direktzugriffspunkt und (iv) einer oder mehreren Eigenschaften der Vielzahl von Hilfsinhaltsströmen umfasst.

11. Verfahren nach Anspruch 9 oder 10, wobei die Vielzahl von Hilfsinhaltsströmen virtuellen Realitätsinhalt umfasst und die Anzeige von einem oder mehreren Vorrichtungstypen eine Fähigkeit zum Rendern von virtuellem Realitätsinhalt umfasst.

12. Computerprogramm, das Anweisungen umfasst, die, wenn sie von einem Computerprogramm ausgeführt werden, es derart steuern, dass es das Verfahren nach einem der vorhergehenden Ansprüche durchführt.

13. Einrichtung, wobei die Einrichtung mindestens einen Prozessor und mindestens einen Speicher umfasst, auf dem computerlesbarer Code gespeichert ist, der, wenn er ausgeführt wird, den mindestens einen Prozessor zu Folgendem steuert:
Empfangen einer ersten Datennachricht, die eine Anzeige der Verfügbarkeit einer Vielzahl von Hilfsinhaltsströmen, die mit einem Sendesignal verknüpft sind, und eine Anzeige von einem oder mehreren Vorrichtungstypen zum Empfangen von jedem der Vielzahl von Hilfsinhaltsströmen umfasst, an einer ersten Vorrichtung; und
in Reaktion auf das Bestimmen, dass eine Vielzahl von zweiten Vorrichtungen dem einen oder den mehreren Vorrichtungstypen entspricht, Bereitstellen einer Anzeige der Verfügbarkeit für die Vielzahl von zweiten Vorrichtungen und Bereitstellen von Wiedergabesynchronisationsinformationen für die Vielzahl von Hilfsinhaltsströmen für die Vielzahl von zweiten Vorrichtungen.

14. Einrichtung nach Anspruch 13, die ferner dazu ausgelegt ist, das Verfahren nach einem der Ansprüche 2 bis 8 durchzuführen.

15. Einrichtung, wobei die Einrichtung mindestens einen Prozessor und mindestens einen Speicher umfasst, auf dem computerlesbarer Code gespeichert ist, der, wenn er ausgeführt wird, den mindestens einen Prozessor zu Folgendem steuert:
Übertragen eines Signals zu einer Vielzahl von Vorrichtungen, das eine erste Datennachricht beinhaltet, die eine Anzeige der Verfügbarkeit einer Vielzahl von Hilfsinhaltsströmen, die mit einem Sendesignal verknüpft sind, und eine Anzeige von einem oder mehreren Vorrichtungstypen zum Empfangen von jedem der Vielzahl von Hilfsinhaltsströmen und Wiedergabesynchronisationsinformationen für die Vielzahl von Hilfsinhaltsströmen umfasst.

## Revendications

1. Procédé comprenant :
la réception au niveau d'un premier dispositif d'un premier message de données comprenant une indication de disponibilité d'une pluralité de flux de contenu auxiliaire associés à un signal de diffusion, et une indication d'un ou plusieurs types de dispositif pour recevoir chacun de la pluralité de flux de contenu auxiliaire ; et
en réponse à la détermination qu'une pluralité de seconds dispositifs correspondent aux un ou plusieurs types de dispositif, la fourniture d'une indication de ladite disponibilité à la pluralité de seconds dispositifs, et la fourniture d'informations de synchronisation de lecture pour la pluralité de flux de contenu auxiliaire à la pluralité de seconds dispositifs.

2. Procédé selon la revendication 1, dans lequel en réponse à la détermination que la pluralité de seconds dispositifs correspondent aux un ou plusieurs types de dispositif, la transmission d'un second message de données à la pluralité de seconds dispositifs pour fournir ladite indication.

3. Procédé selon la revendication 1 ou la revendication 2, dans lequel le premier message de données comprend une indication de disponibilité de contenu de réalité virtuelle associé au signal de diffusion, et l'indication d'un ou plusieurs types de dispositif comprend une capacité de rendu de contenu de réalité virtuelle.

4. Procédé selon une quelconque revendication précédente, dans lequel le premier dispositif est un récepteur de télévision pour recevoir un signal de diffusion de télévision et le premier message de données est reçu avec le signal de diffusion de télévision ou sur un canal sans fil.

5. Procédé selon la revendication 2, ou une quelconque revendication dépendante de celle-ci, dans lequel la pluralité de seconds dispositifs sont l'un parmi un téléphone mobile, un smartphone, une tablette, un casque de réalité virtuelle ou des lunettes de réalité augmentée.

6. Procédé selon une quelconque revendication précédente, dans lequel le premier message de données comprend en outre un ou plusieurs parmi (i) un temps de disponibilité pour la pluralité de flux de contenu auxiliaire (ii) une adresse, un canal ou un lien pour accéder à la pluralité de flux de contenu auxiliaire (iii) un point d'accès aléatoire et (iv) une ou plusieurs caractéristiques de la pluralité de flux de contenu auxiliaire.

7. Procédé selon la revendication 2, ou une quelconque revendication dépendante de celle-ci, dans lequel le premier message de données comprend une indication d'un nombre de retransmissions vers des seconds dispositifs, le procédé comprenant en outre la transmission du second message de données si ledit nombre est inférieur à un nombre maximum permis par ledit premier dispositif.

8. Procédé selon la revendication 2, ou une quelconque revendication dépendante de celle-ci, comprenant en outre la réception au niveau du premier dispositif d'une demande pour accéder au contenu auxiliaire, et en réponse à celle-ci, provoquer la transmission du contenu auxiliaire, dans lequel la demande d'accès est reçue en provenance de la pluralité de seconds dispositifs et le premier dispositif provoque la transmission de la pluralité de flux de contenu auxiliaire vers lesdits seconds dispositifs.

9. Procédé comprenant :
la transmission d'un signal à une pluralité de dispositifs, incluant un premier message de données comprenant une indication de disponibilité d'une pluralité de flux de contenu auxiliaire associés à un signal de diffusion, une indication d'un ou plusieurs types de dispositif pour recevoir chacun de la pluralité de flux de contenu auxiliaire, et des informations de synchronisation de lecture pour la pluralité de flux de contenu auxiliaire.

10. Procédé selon la revendication 9, dans lequel le premier message de données comprend en outre un ou plusieurs parmi (i) un temps de disponibilité pour la pluralité de flux de contenu auxiliaire (ii) une adresse, un canal ou un lien pour accéder à la pluralité de flux de contenu auxiliaire, (iii) un point d'accès aléatoire et (iv) une ou plusieurs caractéristiques de la pluralité de flux de contenu auxiliaire.

11. Procédé selon la revendication 9 ou 10, dans lequel la pluralité de flux de contenu auxiliaire comprend un contenu de réalité virtuelle et l'indication d'un ou plusieurs types de dispositif comprend une capacité de rendu de contenu de réalité virtuelle.

12. Programme informatique comprenant des instructions qui, lorsqu'elles sont exécutées par un programme informatique, le commandent pour effectuer le procédé selon une quelconque revendication précédente.

13. Appareil, l'appareil ayant au moins un processeur et au moins une mémoire sur laquelle est stocké un code lisible par ordinateur qui, lorsqu'il est exécuté, commande l'au moins un processeur :
pour recevoir au niveau d'un premier dispositif un premier message de données comprenant une indication de disponibilité d'une pluralité de flux de contenu auxiliaire associés à un signal de diffusion, et une indication d'un ou plusieurs types de dispositif pour recevoir chacun de la pluralité de flux de contenu auxiliaire ; et
en réponse à la détermination qu'une pluralité de seconds dispositifs correspondent aux un ou plusieurs types de dispositif, pour fournir une indication de ladite disponibilité à la pluralité de seconds dispositifs, et pour fournir des informations de synchronisation de lecture pour la pluralité de flux de contenu auxiliaire à la pluralité de seconds dispositifs.

14. Appareil selon la revendication 13, configuré en outre pour effectuer le procédé selon l'une quelconque des revendications 2 à 8.

15. Appareil, l'appareil ayant au moins un processeur et au moins une mémoire sur laquelle est stocké un code lisible par ordinateur qui, lorsqu'il est exécuté, commande l'au moins un processeur :
pour transmettre un signal à une pluralité de dispositifs, incluant un premier message de données comprenant une indication de disponibilité d'une pluralité de flux de contenu auxiliaire associés à un signal de diffusion, et une indication d'un ou plusieurs types de dispositif pour recevoir chacun de la pluralité de flux de contenu auxiliaire, et des informations de synchronisation de lecture pour la pluralité de flux de contenu auxiliaire.
